# FASCICULE DE BREVET EUROPEEN

(11) **EP 4 352 361 B1**
(45) Date de publication et mention de la délivrance du brevet: **11.03.2026**
(21) Numéro de dépôt: 22733705.2
(22) Date de dépôt: 02.06.2022
(51) Int. Cl.: F03G 7/00, C02F 1/44, B01D 61/00

(54) **PROCÉDÉ DE CONVERSION D'ÉNERGIE OSMOTIQUE EN ÉNERGIE HYDRAULIQUE ET DE DESSALEMENT**
VERFAHREN ZUR UMWANDLUNG OSMOTISCHER ENERGIE IN HYDRAULISCHE ENERGIE UND ZUR ENTSALZUNG
METHOD FOR CONVERTING OSMOTIC ENERGY INTO HYDRAULIC ENERGY AND FOR DESALINATION

(30) Priorité: 08.06.2021 FR 2106005
(43) Date de publication de la demande: 17.04.2024
(73) Titulaire: Université Grenoble Alpes, 38400 Saint-Martin-d'Hères (FR); Centre National de la Recherche Scientifique, 75016 Paris (FR)
(72) Inventeur: PICARD, Cyril, 38120 SAINT EGREVE (FR); CHARLAIX, Elisabeth, 05500 St Julien-en-Champsaur (FR); CHEVREMONT, William, 4651 Herve/Battice (BE)
(74) Mandataire: Novaimo
(86) Numéro de dépôt international: PCT/FR2022/051040
(87) Numéro de publication internationale: WO 2022/258912

(56) Documents cités:
- WO-A1-2016/028135
- WO-A1-86/03135
- KR-A- 20110 097 150

## Description

### Domaine technique

La présente invention appartient au domaine technique des poudres nanoporeuses hydrophobes et sélectives aux ions dont le volume nanoporeux, au sein de chaque grain de poudre, n'est accessible qu'à l'eau douce, et notamment à l'application de ce principe pour la conversion d'énergie osmotique en énergie hydraulique et de dessalement d'eau de mer ou saumurée.

La présente invention se rapporte à un procédé P1 de conversion d'énergie osmotique en énergie hydraulique et P2 de dessalement comprenant des étapes de pressurisation/dépressurisation et de lavage isochore de solution aqueuse comprenant un sel en présence d'un matériau nanoporeux hydrophobe sélectif dont le volume nanoporeux au sein du matériau n'est accessible qu'à l'eau douce et présentant une fraction volumique en nanoporosité allant de 0,2 à 1, de préférence de 0,3 à 0,6 de sorte à convertir de l'énergie osmotique en énergie hydraulique ou inversement à dessaler de l'eau, de préférence de l'eau de mer ou saumurée.

Dans la description, les références entre parenthèses ( ) renvoient à la liste des références présentée à la fin des exemples.

### État de la technique

L'énergie osmotique, est une source d'énergie associée à la différence de concentration en soluté entre deux liquides, tel que les ions salins, par exemple entre l'eau de mer et l'eau douce d'un fleuve. Les diverses approches envisagées jusqu'alors pour récupérer cette énergie, sont essentiellement fondées sur l'utilisation de membranes semiperméables.

La production d'électricité à partir d'énergie osmotique représente, depuis plus de 50 ans, un défi technologique pour parvenir à transporter efficacement l'eau et non les ions salins **(1).** Les stratégies actuellement proposées sont focalisées sur le développement de membranes sélectives, perméables à l'eau et non aux ions **(2).** Malgré de grosses avancées, les membranes disponibles actuellement, à base de matériau polymère, ne permettent d'atteindre qu'une densité de puissance limitée (environ 10 W/m² de membrane) et ne sont pas viables économiquement **(3).** L'utilisation de nanotube de nitrure de bore ou d'oxyde de titane permettrait une augmentation de plusieurs ordres de grandeur de la densité de puissance par rapport aux matériaux polymères, mais la possibilité de leur mise en œuvre sous forme de membrane reste à démontrer **(4).**

La séparation entre l'eau et les ions salins et l'approche membrane n'est pas l'unique voie envisageable.

Il existe une autre approche, dite « capmix » pour capacitive mixing qui s'appuie sur un cycle de charge/décharge électrostatique à l'interface de matériaux poreux alternativement plongés dans une solution pauvre ou riche en ions **(7).** L'approche capmix s'affranchit du problème de perméabilité, l'énergie osmotique est directement convertie en électricité mais à ce jour la densité de puissance reste minime par rapport à l'approche membrane.

Les membranes sélectives employées dans de nombreux procédés de filtration (par exemple dessalage d'eau de mer ou dialyse) et en particulier pour la conversion d'énergie osmotique en énergie utilisable (électrique ou mécanique) présentent deux inconvénients majeurs pour cette dernière application : d'une part une perméabilité limitée à l'eau, ce qui impose de grandes surfaces de membrane, d'autre part une tenue mécanique médiocre ce qui limite fortement la différence de concentration entre les deux fluides employés et en conséquence la densité de puissance des dispositifs.

Il existe ainsi un besoin de proposer une solution qui permet de s'affranchir de ces deux inconvénients liés aux membranes mais qui également, contrairement à l'approche capmix, n'est pas limitée par l'électrocinétique aux interfaces.

Le document WO8603135A1 divulgue un procédé de séparation utilisant comme force propulsive la différence de la pression osmotique entre deux fluides séparés par une membrane hydrophobe semi-perméable. Le procédé permet l'extraction du solvant, par exemple l'eau potable, du processus, par exemple le dessalage de l'eau de mer. En même temps, le procédé divulgue la récupération partielle de l'énergie disponible entre les deux fluides due à la différence de pression osmotique entre eux.

### Description de l'invention

La voie mise en œuvre dans la présente invention, s'appuie sur le développement des systèmes hétérogènes lyophobes, étudiés par une petite communauté scientifique, qui repose sur l'utilisation de poudre nanoporeuse hydrophobes. Ces systèmes sont envisagés jusqu'à présent pour le stockage d'énergie hydraulique par remplissage forcé de chaque grain de poudre en eau sous haute pression pour contrebalancer l'hydrophobie des pores. Cette énergie est récupérable lors de l'expulsion spontanée du liquide hors des pores lorsque la pression est relâchée **(5).**

Une propriété additionnelle de certaine de ces poudres est leur sélectivité qui permet en présence de solution saline un remplissage uniquement en eau pure et à l'exclusion des ions salins hors de la porosité. Cette sélectivité conduit en présence de sel à une augmentation de pression de remplissage/vidange d'intérêt pour augmenter la densité d'énergie hydraulique stockée **(6).** Cette sélectivité, permettant la séparation entre eau et ions présente en outre un intérêt jusqu'alors non considéré pour la collecte d'énergie osmotique associée à de grande différences de concentration en soluté dont on tire profit dans cette invention.

En effet, la saumure saturée en sel des marais salants représente une pression osmotique de 500 MPa équivalente à une hauteur de chute d'eau de l'ordre de 5 km.

La présente invention vise l'exploitation de cette ressource énergétique au moyen d'un cycle fondé sur un remplissage/vidange de la poudre avec alternance du liquide à son contact. Ce fonctionnement sous forme de cycle avec alternance de liquides s'affranchit en outre des limites liées à la conversion directe en électricité du procédé capmix.

L'invention a pour objet un Procédé P1 de conversion d'énergie osmotique en énergie hydraulique, comprenant les étapes :
1a) mise en contact d'une solution aqueuse A comprenant un sel de préférence choisi parmi les sels de métal alcalin et/ou alcalino-terreux, et d'un matériau nanoporeux hydrophobe sélectif dont le volume nanoporeux au sein du matériau n'est accessible qu'à l'eau douce et présentant une fraction volumique en nanoporosité allant de 0,2 à 1, de préférence de 0,3 à 0,6,
1b) pressurisation du mélange obtenu à l'étape 1a) à une pression allant de 10 à 1000 bar, de préférence de 10 à 500 bar, et intrusion de l'eau dans le matériau nanoporeux,
1c) lavage isochore du mélange pressurisé obtenu à l'étape 1b), le lavage étant réalisé au moyen d'une solution aqueuse B comprenant un sel de préférence choisi parmi les sels de métal alcalin et/ou alcalino-terreux,
1d) dépressurisation du mélange lavé à l'étape 1c), expulsion de l'eau hors du matériau nanoporeux, dilution de la solution B et collecte d'énergie hydraulique, caractérisé en ce que la concentration en sel de la solution B est supérieure à celle de la solution A, l'écart de concentration en sel entre la solution A et la solution B étant compris dans un intervalle allant de 0,5 à 25 mol/L.

Avantageusement, la solution B a une concentration en sel inférieure ou égale à 25 mol/L.

Avantageusement, la solution A a une concentration en sel allant de 0 à 2 mol/L.

Avantageusement, le sel est choisi parmi les sels de métal alcalin et/ou alcalino-terreux. Il peut s'agir d'un sel choisi parmi le chlorure de lithium LiCl, le chlorure de sodium NaCl, le chlorure de potassium KCl, le chlorure de césium CsCl, le chlorure de magnésium MgCl₂, le chlorure de calcium CaCl₂, le chlorure de Baryum BaCl₂, le bromure de lithium LiBr, le bromure de sodium NaBr, le bromure de magnésium MgBr₂, le bromure de calcium CaBr₂, le iodure de sodium Lil, le iodure de sodium Nal, le iodure de potassium KI, le iodure de magnésium Mgl₂, le iodure de calcium Cal₂ et leurs mélanges. De préférence, le sel est un sel de métal alcalin ou mélange de sels de métaux alcalins, de préférence choisi parmi les chlorures de métal alcalin, de préférence NaCl et/ou LiCl.

La nature des sels dans les solutions A et B, peut être identique ou différente.

Avantageusement, le matériau nanoporeux est un matériau nanoporeux hydrophobe sélectif dont le volume nanoporeux au sein du matériau n'est accessible qu'à l'eau douce. On entend par « sélectif dont le volume nanoporeux au sein du matériau n'est accessible qu'à l'eau douce », que seules les molécules d'eau peuvent entrer dans le nanomatériau. Les sels, et en particulier les sels cités ci-dessus sont filtrés par le matériau. Le matériau nanoporeux peut présenter une fraction volumique en nanoporosité allant de 0,2 à 1, de préférence de 0,3 à 0,6. On entend par fraction volumique en nanoporosité le rapport entre le volume nanoporeux sur le volume total du matériau avec une mesure du volume nanoporeux par isotherme d'adsorption **(8).** Le matériau nanoporeux peut être sous forme de poudre, agglomérée ou non agglomérée, ou de composite. Lorsqu'il est sous forme de composite, il peut s'agir du piégeage de la poudre dans une mousse de cellulose. Le matériau sous cette forme (poudre ou composite) est piégé dans une enceinte de sorte que le liquide (solution A ou B) puisse entrer et sortir de l'enceinte sans que le solide ne soit transporté.

Avantageusement, le matériau nanoporeux peut être choisi parmi les MOF (metal-organic framework), les zéolites, les imogolites, les silices mésoporeuses, les organosiliciques mésoporeux et les aérogels. De préférence, le matériau nanoporeux peut être choisi parmi le ZIF-8 (zeolitic imidazolate framework 8), le Cu2(tebpz) (tebpz = 3,3',5,5'-tetraethyl-4,4'-bipyrazolate), la silicalite, la chabazite et la SSZ-24 (une zeolite purement silicique de même structure AFI, AFI = Aluminophosphate-five).

Avantageusement, le matériau nanoporeux peux avoir des pores de diamètre moyen allant de 0,5 à 5 nm. Par exemple, dans le cas du matériau ZIF-8, le diamètre des pores est de 1,2 nm. On entend par diamètre des pores, le diamètre maximal au sein de la structure poreuse. Le diamètre des pores peut généralement être déterminé théoriquement à partir de la structure cristallographique du matériau et par mesures de diffraction de rayon X et isotherme d'adsorption **(8).** Dans la référence **(8),** les mesures de diffraction sont effectuées au moyen d'un diffractomètre Bruker - AXS, Madison, WI et les isothermes d'adsorption sont réalisées sur un appareil à adsorption de diazote et de dihydrogène Quantachrome - Autosorb-1C.

Avantageusement, le matériau nanoporeux peux avoir des constrictions de diamètre moyen de 0,2 à 1 nm, de préférence allant de 0,2 nm à 0,5 nm. Par exemple, dans le cas du matériau ZIF-8, le diamètre des constrictions est de 0,34 nm. On entend par constrictions, la région des pores dont le diamètre moyen est minimal au sein de la structure poreuse. Le diamètre moyen des constrictions peut généralement être déterminé théoriquement à partir de la structure cristallographique du matériau et par mesures de diffraction de rayon X et isotherme d'adsorption **(8).** Dans la référence **(8),** les mesures de diffraction sont effectuées au moyen d'un diffractomètre Bruker - AXS, Madison, WI et les isothermes d'adsorption sont réalisées sur un appareil à adsorption de diazote et de dihydrogène Quantachrome - Autosorb-1C.

On définit un milieu réactionnel, milieu dans lequel la matériau nanoporeux subit le procédé. On définit un ratio M (v/v) de volume de matériau nanoporeux sur le volume du milieu réactionnel. Avantageusement, le ratio M (v/v) peut avoir une valeur allant de 0,2 à 1, de préférence 0,7.

Avantageusement, l'étape 1a) du procédé P1 selon l'invention, peut être mise en œuvre dans une enceinte ou cellule haute pression (milieu réactionnel) tel qu'un accumulateur hydraulique dont le volume peut être compris dans un intervalle allant de 1 cm³ à 100 dm³. La cellule peut par exemple être constituée d'une base rigide cylindrique en inox et d'un capot de fermeture qui comprend une membrane élastomère. Les dimensions internes de la cellule peuvent par exemple être 19 mm de diamètre et 11 mm de hauteur. La cellule peut comprendre un réservoir, de préférence cylindrique. Le réservoir est configuré pour être perméable au liquide (solution A ou B) mais pas au matériau nanoporeux afin que celui-ci ne soit pas entrainer lors des étapes de lavage **(10).**

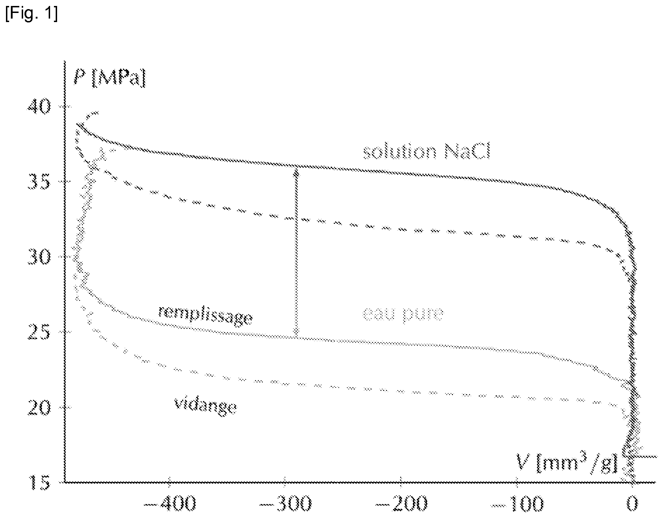

Avantageusement, l'étape 1b) du procédé P1 selon l'invention, peut être mise en œuvre au moyen d'un équipement haute pression tel qu'un vérin hydraulique. Il peut s'agir par exemple du matériel décrit dans le manuscrit en référence **(10).** La durée de l'étape 1b) peut être comprise dans un intervalle allant de 10 ms à 10 s et de préférence de 100 ms à 1 s. La pression appliquée à l'étape 1b) dépend de la structure et de la nature chimique du matériau nanoporeux utilisé et de la température à laquelle est mise en œuvre l'étape 1b) et de la composition du de la solution employée (ici solution A). Par exemple, dans le cas du matériau ZIF-8, une pression de l'ordre de 250 bar est suffisante pour le remplissage des pores (voir figure 1) en eau pure à température de 25°C.

Avantageusement, l'étape 1c) du procédé P1 selon l'invention 1c) est un lavage isochore du mélange pressurisé obtenu à l'étape 1b), le lavage étant réalisé au moyen d'une solution aqueuse B comprenant un sel de préférence choisi parmi les sels de métal alcalin et/ou alcalino-terreux. Lors de l'étape 1c), la solution A externe au matériau nanoporeux est remplacée par la solution B. Le lavage est réalisé dans des conditions telles que l'eau piégée dans le matériau nanoporeux y reste. Lors de la mise en œuvre de l'étape 1c) du procédé P1 selon l'invention, la pression augmente dans le système à volume constant. Cette augmentation de pression est due à la différence de concentration en sel entre les solutions aqueuses A et B. Le procédé P1 selon l'invention peut ainsi comprendre une augmentation de la pression, pendant l'étape 1c) de lavage. Par exemple, lors du passage d'une solution A à 0 mol/L à une solution B à 5,2 mol/L, l'augmentation de pression lors de l'étape 1c) est de 405 bar à 25°C. Par exemple, pour des concentrations infiniment faibles la pression osmotique Π est donnée par la formule de Van' t Hoff Π *= i c RT* avec *c* la concentration en sel, *i* le nombre d'ions contenus dans le sel, *R* la constante des gaz parfaits et *T* la température et pour le cas particulier du sel NaCl à la température de 25°C, la loi phénoménologique suivante permet d'exprimer la pression osmotique quelle que soit la concentration *c* de 0 à 6 mol/L : Π = Π₀ ln *a*(*C*) avec la pression Π₀ = 137 MPa et l'activité *a*(*C*) *=* 1 - 0,0256 *C* - 0,0045 *C*². L'étape 1c) peut être mise en œuvre au moyen d'un vérin double effet à tige traversante. Un vérin double effet à tige traversante comprend généralement un piston central qui sépare deux chambres, l'une contenant la solution B et la seconde la solution A. Lors du déplacement de ce piston le volume de solution B injecté dans la cellule est identique à celui de solution A quittant la cellule. En outre, les deux fluides sont à pression quasi-identique car ils sont en contact au sein de la cellule (différence de pression comprise dans un intervalle allant de 0 à 10 bar nécessaire à la circulation du liquide, entre la pression d'entrée et de sortie de la cellule). Le lavage se fait à une pression égale à la somme de la pression de vidange du matériau en eau pure et de la pression osmotique de la solution en contact avec le matériau à la température considérée. Par exemple, lorsque la solution B est une solution aqueuse de NaCl à 5,2 mol/L à 25° C, le lavage commence à la pression de remplissage de la solution A de 250 bar, somme de la pression de 250 bar de remplissage en eau pure du matériaux ZIF-8 et de la pression osmotique de 0 bar de la solution A de concentration nulle, et se termine à la pression de remplissage de la solution B de 655 bar, somme de la pression de 250 bar de remplissage en eau pure du matériaux ZIF-8 et de la pression osmotique de 405 bar de la solution B. La durée de l'étape 1c) peut être comprise dans un intervalle allant de 10 ms à 10 s, de préférence de 100 ms à 1 s.

Avantageusement, l'étape 1d) du procédé P1 selon l'invention, peut être mise en œuvre au moyen d'un équipement haute pression tel qu'un vérin hydraulique. Il peut s'agir par exemple du matériel décrit dans le manuscrit **(10).** La durée de l'étape 1d) peut être comprise dans un intervalle allant de 10 ms à 10 s et de préférence de 100 ms à 1 s. La dépressurisation appliquée à l'étape 1d) dépend du matériau nanoporeux utilisé, de la composition de la solution (ici B) et de la température à laquelle est mise en œuvre l'étape 1d). Lors de l'étape 1d), la dépressurisation et les paramètres associés sont imposés par la concentration de la solution B, la nature du matériau nanoporeux et la température de mise en œuvre du procédé.

Avantageusement, le procédé P1 selon l'invention peut comprendre en outre une étape 1e) de lavage isochore du mélange obtenu à l'issue de l'étape 1d), le lavage étant réalisé au moyen d'une solution aqueuse A. Lors de la mise en œuvre de l'étape 1e) du procédé P1 selon l'invention, la pression diminue dans le système à volume constant. Cette diminution de pression est due à la différence de concentration en sel entre les solutions aqueuses B et A. Le procédé P1 selon l'invention peut ainsi comprendre une diminution de la pression, pendant l'étape 1e) de lavage. Par exemple, lors du passage d'une solution B à 5,2 mol/L à une solution A à 0 mol/L, la diminution de pression lors de l'étape 1e) est de 405 bar à 25°C. Pour des concentrations infiniment faibles la diminution de pression Π est donnée par la formule de Van' t Hoff Π *= i* Δ*c RT* avec Δ*c* la concentration en sel, *i le* nombre d'ions contenus dans le sel, R la constante des gaz parfaits et *T* la température et pour le cas particulier du sel NaCl à la température de 25°C, la loi phénoménologique suivante permet d'exprimer la pression osmotique quelle que soit la concentration *c* de 0 à 6 mol/L : Π = Π₀ ln *a*(*C*) avec la pression Π₀ = 137 MPa et l'activité *a*(*C*) *=* 1 - 0,0256 C - 0,0045 *C*². L'étape 1e) peut être mise en œuvre au moyen d'un vérin double effet à tige traversante. Un vérin double effet à tige traversante comprend généralement un piston central qui sépare deux chambres, l'une contenant la solution A et la seconde la solution B. Lors du déplacement de ce piston le volume de solution A injecté dans la cellule est identique à celui de solution B quittant la cellule. En outre, les deux fluides sont à pression quasi-identique car ils sont en contact au sein de la cellule (différence de pression comprise dans un intervalle allant de 0 à 10 bar nécessaire à la circulation du liquide). Le lavage se fait à une pression égale à la somme de la pression de vidange du matériau en eau pure et de la pression osmotique de la solution en contact avec le matériau à la température considérée. Par exemple, lorsque la solution B est une solution aqueuse de NaCl à 5,2 mol/L à 25° C, le lavage commence à la pression de vidange de la solution B de 585 bar, somme de la pression de 180 bar de vidange en eau pure du matériaux ZIF-8 et de la pression osmotique de 405 bar de la solution B, et se termine à la pression de vidange de la solution A de 180 bar, somme de la pression de 180 bar de vidange en eau pure du matériaux ZIF-8 et de la pression osmotique de 0 bar de la solution A. La durée de l'étape 1c) peut être comprise dans un intervalle allant de 10 ms à 10 s et de préférence de 100 ms à 1 s.

Avantageusement, le procédé selon l'invention peut comprendre en outre une étape 1f) de conversion de l'énergie hydraulique collectée à l'étape 1d) en énergie mécanique ou électrique. L'étape 1f) peut être mise en œuvre au moyen d'un moteur hydraulique ou d'une turbine l'un comme l'autre pouvant être couplés à un alternateur.

Avantageusement, le procédé selon l'invention peut être mis en œuvre de sorte à répéter les étapes 1b), 1c), 1d), 1e) et éventuellement 1f). Le procédé P1 peut donc peut être mis en œuvre de sorte que les étapes successives soient : 1a), 1b), 1c), 1d), 1e), 1b), 1c), 1d), 1e), etc. Les étapes 1b), 1c), 1d), 1e) et éventuellement 1f) peuvent être répétées un nombre n d'itérations, n étant un nombre entier supérieur ou égal à 2. Par exemple, en fonctionnement normal, pour une enceinte (milieu réactionnel) d'un volume 100 mL, d'un volume d'eau de 50 mL litres et d'un volume de poudre de ZIF-8 de 50 mL, la valeur de n peut être de de l'ordre du million.

Avantageusement, le procédé selon l'invention peut être mis en œuvre à une température allant de 5 à 150 °C, de préférence de 20 à 70 °C.

L'invention se rapporte aussi à un procédé P2 de dessalement d'une solution comprenant un sel, de préférence de l'eau de mer ou saumurée, comprenant les étapes :
2a) mise en contact d'une solution aqueuse B comprenant un sel de préférence choisi parmi les sel de métal alcalin et/ou alcalino-terreux, et d'un matériau nanoporeux hydrophobe sélectif dont le volume nanoporeux au sein du matériau n'est accessible qu'à l'eau douce et présentant une fraction volumique en nanoporosité allant de 0,2 à 1, de préférence de 0,3 à 0,6,
2b) pressurisation du mélange obtenu à l'étape 2a) à une pression allant de 10 à 1200 bar, de préférence de 200 à 800 bar et de manière encore préférée 250 bar, et intrusion de l'eau dans le matériau nanoporeux,
2c) lavage isochore du mélange pressurisé obtenu à l'étape 2b), le lavage étant réalisé au moyen d'une solution aqueuse C, la solution aqueuse C étant de l'eau pure ou de l'eau douce,
2d) dépressurisation du mélange lavé obtenu à l'étape 2c), expulsion de l'eau hors du matériau nanoporeux, dilution de la solution C, collecte d'eau appauvrie en sel.

On entend par « eau appauvrie en sel collectée », le mélange formé par la solution C et l'eau qui était retenue dans le matériau.

Les définitions données ci-dessus concernant le matériau nanoporeux, le sel, la solution aqueuse B, les températures, les ratios, ainsi que tous les paramètres relatifs à l'appareillage, du procédé P1 sont applicables au procédé P2.

Avantageusement, l'étape 2a) du procédé P2 selon l'invention, peut être mise en œuvre dans une enceinte ou cellule haute pression (milieu réactionnel) telle que décrite dans le cadre de l'étape 1a) du procédé P1. La cellule peut comprendre un réservoir, de préférence cylindrique. Le réservoir est configuré pour être perméable au liquide (solution B ou C) mais pas au matériau nanoporeux afin que celui-ci ne soit pas entrainer lors des étapes de lavage.

Avantageusement, l'étape 2b) du procédé P2 selon l'invention, peut être mise en œuvre au moyen d'un équipement haute pression tel qu'un vérin hydraulique. Il peut s'agir par exemple du matériel décrit dans le manuscrit **(10).** La durée de l'étape 2b) peut être comprise dans un intervalle allant de 10 ms à 10 s et de préférence de 100 ms à 1 s. La pression appliquée à l'étape 2b) dépend du matériau nanoporeux utilisé et de la température à laquelle est mise en œuvre l'étape 1b) et de la composition de la solution employée (ici solution B). Par exemple, dans le cas du matériau ZIF-8, une pression de l'ordre de 655 bar est suffisante pour le remplissage des pores (voir figure 1).

Avantageusement, la mise en œuvre de l'étape 2c) du procédé P2 est similaire à celle de l'étape 1e) du procédé P1, mais menée à la pression de l'étape 2b) du procédé P2. Ainsi, l'étape 2c) du procédé P2 selon l'invention est un lavage isochore du mélange pressurisé obtenu à l'étape 2b), le lavage étant réalisé au moyen d'une solution aqueuse C, la solution aqueuse C étant de l'eau pure ou de l'eau douce (par exemple de l'eau de distribution ou de l'eau du robinet). Lors de l'étape 2c), la solution B externe au matériau nanoporeux est remplacée par la solution C. Le lavage est réalisé dans des conditions telles que l'eau piégée dans le matériau nanoporeux y reste. Lors de la mise en œuvre de l'étape 2c) du procédé P2 selon l'invention, la pression diminue dans le système à volume constant. Cette diminution de pression est due à la différence de concentration en sel entre les solutions aqueuses B et C. Le procédé P2 selon l'invention peut ainsi comprendre une diminution de la pression, pendant l'étape 2c) de lavage. Par exemple, lors du passage d'une solution B à 5,2 mol/L à une solution C exempte de sel (ou contenant de faible concentration en sel, notamment lorsqu'il s'agit d'eau douce), la diminution de la pression lors de l'étape 2c) est de 405 bar. Pour des concentrations infiniment faibles la diminution de pression Π est donnée par la formule de Van' t Hoff Π = *i* Δ*c RT* avec Δ*c* la concentration en sel, *i le* nombre d'ions contenus dans le sel, *R* la constante des gaz parfaits et *T* la température et pour le cas particulier du sel NaCl à la température de 25°C, la loi phénoménologique suivante permet d'exprimer la pression osmotique quelle que soit la concentration c de 0 à 6 mol/L : Π = Π₀ In *a*(*C*) avec la pression Π₀ = 137 MPa et l'activité *a*(*C*) *=* 1 - 0,0256 C - 0,0045 *C*². L'étape 2c) peut être mise en œuvre au moyen d'un vérin double effet à tige traversante. Un vérin double effet à tige traversante comprend généralement un piston central qui sépare deux chambres, l'une contenant la solution B et la seconde la solution C. Lors du déplacement de ce piston le volume de solution C injecté dans la cellule est identique à celui de solution B quittant la cellule. En outre, les deux fluides sont à pression quasi-identique car ils sont en contact au sein de la cellule (différence de pression comprise dans un intervalle allant de 0 à 10 bar nécessaire à la circulation du liquide). La pression est égale à la somme de la pression de vidange du matériau en eau pure et de la pression osmotique de la solution en contact avec le matériau à la température considérée. Par exemple, lorsque la solution B est une solution aqueuse de NaCl à 5,2 mol/L à 25° C, le lavage commence à la pression de remplissage de la solution B de 655 bar, somme de la pression de 250 bar de remplissage en eau pure du matériaux ZIF-8 et de la pression osmotique de 405 bar de la solution B, et se termine à la pression de remplissage de la solution C de 250 bar, somme de la pression de 250 bar de remplissage en eau pure du matériaux ZIF-8 et de la pression osmotique de 0 bar de la solution C. La durée de l'étape 1c) peut être comprise dans un intervalle allant de 10 ms à 10 s et de préférence de 100 ms à 1 s.

Avantageusement, l'étape 2d) du procédé P2 selon l'invention, peut être mise en œuvre au moyen d'un équipement haute pression tel qu'un vérin hydraulique. Il peut s'agir par exemple du matériel décrit dans le manuscrit **(10).** La durée de l'étape 2d) peut être comprise dans un intervalle allant de 10 ms à 10 s et de préférence de 100 ms à 1 s. La dépressurisation appliquée à l'étape 2d) dépend du matériau nanoporeux utilisé, de la composition de la solution (ici C) et de la température à laquelle est mise en œuvre l'étape 2d). Lors de l'étape 2d), la dépressurisation et les paramètres associés sont imposés par la concentration de la solution C, la nature du matériau nanoporeux et la température de mise en œuvre du procédé. A l'étape 2d) du procédé P2 selon l'invention, l'eau pure, piégée dans le matériau nanoporeux est expulsée et mélangée à la solution C. Le procédé P2 a ainsi permis de dessaler une partie de la solution B, via son passage dans le matériau puis sa dilution dans la solution C. Dans le cadre de la mise en œuvre du procédé P2 pour le dessalement d'une saumure concentrée, le procédé selon l'invention est plus performant qu'une approche classique par membrane. Plus précisément, le surcout énergétique par rapport au cout minimale thermodynamique de dessalement reste modeste devant le surcout propre aux approches classiques par membrane.

Avantageusement, le procédé P2 selon l'invention peut comprendre en outre une étape 2e) de lavage isochore du mélange obtenu à l'issue de l'étape 2d), le lavage étant réalisé au moyen d'une solution aqueuse B. La mise en œuvre de l'étape 2e) est similaire à celle de l'étape 1c) mais menée à pression de l'étape 1d). Avantageusement, lors de la mise en œuvre de l'étape 2e) du procédé P2 selon l'invention, la pression augmente dans le système du fait du retour de la solution C à la solution B à volume constant. Cette augmentation de pression est due à la différence de concentration en sel entre les solutions aqueuses C et B. Le procédé P2 selon l'invention peut ainsi comprendre une augmentation de la pression, pendant l'étape 2e) de lavage. Par exemple, lors du passage d'une solution C (qui ne comprend pas ou quasiment pas de sel) à une solution B à 5,2 mol/L, l'augmentation de la pression lors de l'étape 2e') est de 405 bar. Pour des concentrations infiniment faibles l'augmentation de pression Π est donnée par la formule de Van' t Hoff Π *= i* Δ*c RT* avec Δ*c* l'écart de concentration en sel, *i* le nombre d'ions contenus dans le sel, *R* la constante des gaz parfaits et *T* la température et pour le cas particulier du sel NaCl à la température de 25°C, la loi phénoménologique suivante permet d'exprimer la pression osmotique quelle que soit la concentration c de 0 à 6 mol/L : Π = Π₀ ln *a*(*C*) avec la pression Π₀ = 137 MPa et l'activité *a*(*C*) *=* 1 - 0,0256 *C* - 0,0045 *C*². L'étape 2e) peut être mise en œuvre au moyen d'un vérin double effet à tige traversante. Un vérin double effet à tige traversante comprend généralement un piston central qui sépare deux chambres, l'une contenant la solution C et la seconde la solution B. Lors du déplacement de ce piston le volume de solution B injecté dans la cellule est identique à celui de solution C quittant la cellule. En outre, les deux fluides sont à pression quasi-identique car ils sont en contact au sein de la cellule (différence de pression comprise dans un intervalle allant de 0 à 10 bar nécessaire à la circulation du liquide, entre la pression d'entrée et de sortie de la cellule). Le lavage se fait à une pression égale à la somme de la pression de vidange du matériau en eau pure et de la pression osmotique de la solution en contact avec le matériau à la température considérée. Par exemple, lorsque la solution B est une solution aqueuse de NaCl à 5,2 mol/L à 25° C, le lavage commence à la pression de remplissage de la solution C de 250 bar, somme de la pression de 250 bar de remplissage en eau pure du matériaux ZIF-8 et de la pression osmotique de 0 bar de la solution C, et se termine à la pression de remplissage de la solution B de 655 bar, somme de la pression de 250 bar de remplissage en eau pure du matériaux ZIF-8 et de la pression osmotique de 405 bar de la solution B. La durée de l'étape 1c) peut être comprise dans un intervalle allant de 10 ms à 10 s, de préférence de 100 ms à 1 s.

Avantageusement, le procédé P2 selon l'invention peut être mis en œuvre de sorte à répéter les étapes 2b), 2c), 2d) et 2e). Le procédé P2 peut donc peut être mis en œuvre de sorte que les étapes successives soient : 2a), 2b), 2c), 2d), 2e), 2b), 2c), 2d), 2e), etc. Les étapes sont 2b), 2c), 2d) et 2e) peuvent être répétées un nombre m d'itérations, m étant un nombre entier supérieur ou égal à 2. Par exemple, en fonctionnement normal, pour une enceinte (milieu réactionnel) d'un volume 100 mL, d'un volume d'eau de 50 mL litres et d'un volume de poudre de ZIF-8 de 50 mL, la valeur de m peut être de de l'ordre du million.

De manière non limitative, les procédé P1 et P2 présentent en outre les avantages suivants :
- les procédés P1 et P2 selon l'invention peuvent être mis en œuvre dans le même dispositif ;
- les procédés P1 et P2 fonctionnent par osmose volumique entre l'extérieur et l'intérieur des particules nanoporeuses hydrophobe et sélective ;
- les procédés P1 et P2 exploitent la surface d'échange correspondant à la surface externe de l'ensemble des particules nanoporeuses. Cette surface d'échange, fixée par la taille des particules nanoporeuses est comprise entre 0.1 et 100 m²/g. Cette surface d'échange permet un fonctionnement rapide avec des durée de remplissage/vidange comprise entre 10 ms et 10 s et de préférence entre 100 ms et 1 s ;
- les procédés P1 et P2 reposent sur une sollicitation mécanique isotrope de chaque particule nanoporeuse, qui autorise un fonctionnement en présence de solutions concentrées dont la pression osmotique peut atteindre 1000 bar.

### Brève description des figures

[Fig. 1] La figure 1 représente un cycle de remplissage/vidange en eau pure dans le ZIF-8 en présence d'une solution saline de NaCl à 2 mol/L à 70°C.

### Exemples

### Exemple 1 : mise en œuvre du procédé P1 selon l'invention

Le procédé selon l'invention est illustré en employant un matériau nanoporeux hydrophobe sélectif dont le volume nanoporeux au sein du matériau n'est accessible qu'à l'eau douce : le ZIF-8 (8).

Il s'agit d'un matériau de type metal organic framework (MOF), constitué d'atomes de zinc liés par ligands organiques, présente une structure nanoporeuse sous forme de cages sphériques organisées en une structure cubique. Les pores du ZIF-8 ont un diamètre de 1,2 nm. Les cages (ou pores) sont interconnectées par des constrictions de diamètre 0,34 nm. Le volume nanoporeux de ce matériau représente une fraction volumique de 0,4.

Le ZIF-8 est un matériau hydrophobe qui présente une faible affinité pour les solutions aqueuses. Remplissage et vidange du volume disponible à l'intérieur du matériau nanoporeux s'effectuent sous pression (intrusion et expulsion de liquide dans et hors du matériau nanoporeux). A température ambiante, le matériau se remplit en eau pure à une pression quasi-constante de l'ordre de 250 bar tandis que la vidange a lieu pour une pression de l'ordre de 180 bar. Ces pressions dépendent de la température, de la nature de la solution aqueuse et dans une moindre mesure la durée de remplissage/vidange (voir Fig. 1 et tableau 2).

En présence de solution saline, les sels étant exclus du volume disponible à l'intérieur du matériau nanoporeux, ils ne pénètrent pas dans le matériau nanoporeux hydrophobe. On observe par effet osmotique une augmentation de la pression d'intrusion et d'expulsion fonction de la concentration en sel (voir Fig. 1) **(9-10).** C'est ce décalage en pression qui est à l'origine de l'énergie récupérable par le procédé selon l'invention. Pour une solution de chlorure de sodium NaCl à saturation, soit 5,2 mol/L, à température ambiante, on observe un décalage de 405 bars vers les hautes pressions : l'intrusion de liquide se fait à 655 bars et l'extrusion du liquide à 585 bars.

Le procédé est mis en œuvre dans une cellule haute pression adaptée pour l'étude des phénomènes de remplissage/vidange de matériaux nanoporeux hydrophobes sous haute pression. La cellule est constituée d'une base rigide cylindrique en inox et d'un capot de fermeture qui comprend une membrane élastomère. Une fois la cellule remplie, la variation de volume est assurée par un piston venant déformer la membrane, cette dernière permettant simultanément d'assurer la tenue en pression, la déformabilité du système et son étanchéité en régime dynamique pour des vitesses de piston de 0 à 500 mm/s. L'ensemble du système se monte sur une machine de traction employée pour contrôler le déplacement du piston. Cette machine hydraulique permet de délivrer/dissiper l'énergie stockée/restituée lors des phénomènes de remplissage/vidange du matériau. Dans le cadre d'une application industrielle cette machine de traction est remplacée par un système de conversion d'énergie mécanique en électricité par exemple.

Le volume de la cellule permet d'accommoder un réservoir cylindrique. Une des bases du réservoir est fermée par une membrane microporeuse, perméable au liquide mais pas à la poudre de ZIF-8, la seconde base est fermée par une membrane déformable. Ce réservoir comprend deux connexions hydrauliques qui permettent la circulation et le changement de liquide tout en conservant la poudre à l'intérieur du réservoir par l'intermédiaire du fritté. Une fois le réservoir rempli il est placé à l'intérieur de la cellule et noyé dans de l'eau destinée à transmettre la pression.

Les exemples ci-dessous ont été réalisés dans un modèle de laboratoire comprenant ce réservoir qui doit être extrait de la cellule pour les changements de liquide.

Dans une version alternative, la cellule permet un changement de liquide in situ au moyen de piquages haute pression, sans démontage du réservoir.

La solution A est de l'eau pure. La solution B est une eau saumurée, ayant une concentration en NaCl égale à 5,2 mol/L. L'écart de concentration en NaCl entre la solution A et la solution B est donc de 5,2 mol/L.

Le procédé est mis en œuvre à 25°C.

L'étape 1a) est mise en œuvre en plaçant 400 mg de poudre de ZIF-8 dans un réservoir de volume = 2,5 cm³, et en complétant le volume par de l'eau pure (solution A). Le réservoir ainsi rempli est placé dans la cellule haute pression qui est fermée par le capot haute pression. (ratio M (v/v) = 0,18)
Etape 1b) : La cellule fermée est mise sous pression par déplacement vertical à vitesse imposée du piston de 1 mm/s à température ambiante. Au cours de ce déplacement la pression qui augmente au sein de la cellule est transmise à l'ensemble liquide/poudre contenu dans le réservoir par le biais de la membrane souple fermant le réservoir. La pression augmente initialement par compression du liquide et déformation élastique de la cellule jusqu'à atteindre une pression de 240 bar qui marque le début du remplissage du matériau nanoporeux en liquide. Ce phénomène de remplissage s'achève à une pression de 260 bar. Le remplissage dur 0,5 s représente une variation de volume de 160 mm³, et s'opère à une pression moyenne de 250 bar. Cette pression est indépendante de la quantité de poudre, pour une quantité double placée dans le réservoir, pour une même vitesse de piston on double la durée de remplissage mais la plage de pression de remplissage (240-260 bar) reste identique. L'énergie associée au phénomène transfert de 160 mm³ sous 250 bar est de 4 J, la puissance mécanique correspondante pour un remplissage en 0,5 s est de 8 W.

L'étape 1c) requiert de changer de liquide sous pression de façon à maintenir l'eau douce dans la nanoporosité. Cette étape n'a pas été réalisée en tant que telle dans le modèle de laboratoire. L'étape 1c) de lavage a été mise en œuvre par extraction du réservoir hors de la cellule ce qui impose un retour à pression ambiante, donc sortie du liquide or de la nanoporosité et donc rupture du cycle. Cette mise en œuvre ne permet pas de convertir l'énergie osmotique en énergie hydraulique, mais permet d'évaluer l'énergie récupérable dans une mise en œuvre sans rupture du cycle par lavage isochore sous pression.

Pour la mise en œuvre de l'étape 1c), sans rupture de cycle, le lavage isochore sous pression est réalisé au moyen d'un vérin à solénoïde double effet. Le vérin double effet comprend un piston central qui sépare deux chambres, l'une contenant la saumure (solution B) la seconde le liquide issu du dispositif (solution A). Lors du déplacement de ce piston le volume de solution B injecté dans la cellule est identique à celui de solution A quittant la cellule. En outre, les deux fluides sont à pression quasi-identique (si ce n'est le faible écart de pression nécessaire au déplacement du piston) car ils sont en contact au sein de la cellule : ils passent tous deux de 250 à 650 bar, le niveau de pression étant fixé par l'écart de concentration entre l'eau douce maintenue dans la le matériau nanoporeux et le liquide contenu dans la cellule dont la concentration augmente lors du déplacement du piston.

Ainsi le processus de lavage, lorsqu'il est effectué sous pression, ne représente qu'une consommation d'énergie minime. Pendant toute la durée de l'étape 1c), le piston qui contrôle le volume de la cellule est maintenu en position fixe correspondant à un étant comprimé du système.

L'étape 1d) est réalisée par dépressurisation du système. Le piston est relâché et se déplace hors de la cellule. Le déplacement s'opère à pression imposée par le phénomène de vidange de l'eau hors du matériau nanoporeux à la pression de 580 bar à température ambiante.

Dans le cadre des expériences menées pour cet exemple, la vitesse du piston est imposée par la machine de traction, par exemple 1 mm/s dans le sens opposé à celui de l'étape 1b). L'énergie associée à l'expulsion des 160 mm³ de liquide hors de la nanoporosité (pour 400 mg de poudre) à une pression de 580 bar est de 9.3 J et correspond à une puissance motrice de 18 W. L'énergie net extraite au cours du cycle correspond à la différence entre l'énergie stockée à l'étape 1b) et celle récupérée à l'étape 1d) soit 10 J.

L'énergie extraite au cours du cycle est fixée par l'écart de pression entre les étapes 1d et 1b multiplié par le changement de volume associé au remplissage et à la vidange, c'est-à-dire le volume disponible au sein du matériau nanoporeux.

Ainsi, pour 1 kg de ZIF-8 le volume nanoporeux est de l'ordre de 0,4 L. Compte tenu de la différence de pression de 330 bar on obtient une énergie de 13 kJ. L'écart de pression récupéré de 330 bar est inférieur aux 400 bar de pression osmotique à cause de l'hystérésis entre remplissage et vidange, soit une perte de 18 % d'énergie

Cette perte d'énergie peut être fortement minimisée par augmentation de la température de fonctionnement (voir exemple 2).

Un avantage supplémentaire du procédé est que les pressions sont quasi-constantes pour des durées de remplissage/vidange supérieures à 0,1 s ce qui permet d'effectuer les étapes 1b) et 1d) rapidement sans perte additionnelle d'énergie (voir tableau 2). Cet aspect constitue un avantage notable du procédé selon l'invention par rapport à une utilisation classique de membrane sélective pour les procédés de conversion d'énergie osmotique avec lesquelles la perte de pression augmente linéairement avec le débit de liquide (c'est-à-dire inversement au temps de passage).

Compte-tenu de la distance de l'ordre du micron entre grain de poudre, le transfert de fluide lors des phases de lavage (étapes 1c et 1e) peut s'effectuer sur une durée de 0.5 s (identique à la durée des phase 1b et 1d) et requiert une différence de pression de quelques bars, modeste en regard de la différence de pression osmotique.

La puissance moyenne délivrée par le procédé peut être estimée en divisant l'énergie collectée au cours d'un cycle par la durée d'un cycle. En prenant une valeur de 0,5 s par étape du cycle la durée totale d'un cycle est de 2 s. Ainsi à partir des 13 kJ obtenus pour une saumure à saturation de NaCl, à température ambiante, on obtient, dans le cadre de cet exemple, une puissance de 6.4 kW pour 1 kg de ZIF-8.

**[Table 1]**

| [NaCl]_{A} mol/L | [NaCl]_{B} mol/L | Pₒₛₘ bar | Pᵢₙₜ bar | Pₑₓₜ bar | Pₑₓₜ-Pᵢₙₜ bar | Eₑₓₜ kJ/L | Eₜₒₜ kJ/L | η |
|---|---|---|---|---|---|---|---|---|
| 0 | 0 | 0 | 250 | 180 | -65 | -6.5 | 0 | |
| 0 | 0.5 | 22 | 250 | 202 | -43 | -4.3 | 2.2 | |
| 0 | 1 | 46 | 250 | 226 | -19 | -1.9 | 4.6 | |
| 0 | 2 | 105 | 250 | 285 | 40 | 4 | 10.5 | 0.38 |
| 0 | 4 | 268 | 250 | 448 | 203 | 20.3 | 26.8 | 0.75 |
| 0 | 5.2 | 405 | 250 | 585 | 340 | 34 | 40.5 | 0.83 |

Tableau 1 : Energie extraite à 25°C en fonction des concentration des solution A et B. [NaCl]_{A} concentration en NaCl de la solution A, [NaCl]_{B} concentration en NaCl de la solution B, Pₒₛₘ pression osmotique induite par l'écart de concentration, Pᵢₙₜ pression d'intrusion, Pₑₓₜ pression d'expulsion, Pₑₓₜ-Pᵢₙₜ écart entre pression d'intrusion et pression d'expulsion, Eₑₓₜ énergie extraite par unité de volume de liquide expulsé, Eₜₒₜ énergie totale d'origine osmotique par unité de volume de liquide expulsé, η rendement du processus de conversion.

### Exemple 2 : Etude de l'influence de la température sur le rendement du procédé

L'Exemple 1 ci-dessus est reproduit est reproduit à différentes températures. Le procédé est successivement mis-en-œuvre aux températures de 5, 15, 30, 50 et 70°C.

**[Table 2]**

| T °C | Pₒₛₘ bar | Pᵢₙₜ bars | Pₑₓₜ bar | Pₑₓₜ-Pᵢₙₜ bar | Eₑₓₜ kJ/L | Eₜₒₜ kJ/L | η |
|---|---|---|---|---|---|---|---|
| 5 | 384 | 230 | 534 | 304 | 30.4 | 38.4 | 0.79 |
| 15 | 398 | 235 | 568 | 333 | 33.3 | 39.8 | 0.83 |
| 30 | 418 | 250 | 613 | 363 | 36.3 | 41.8 | 0.86 |
| 50 | 446 | 255 | 651 | 396 | 39.6 | 44.6 | 0.88 |
| 70 | 474 | 260 | 694 | 434 | 43.4 | 47.4 | 0.92 |

Tableau 2 : Energie extraite en fonction de la température pour une solution A à 0 mol/L et une solution B à 5.2 mol/L. Pₒₛₘ pression osmotique induite par l'écart de concentration, Pᵢₙₜ pression d'intrusion, Pₑₓₜ pression d'expulsion, Pₑₓₜ-Pᵢₙₜ écart entre pression d'intrusion et pression d'expulsion, Eₑₓₜ énergie extraite par unité de volume de liquide expulsé, Eₜₒₜ énergie totale d'origine osmotique par unité de volume de liquide expulsé, η rendement du processus de conversion.

Une réduction de l'écart entre pression de remplissage et pression de vidange a été observée lorsque la température augmente. Comme indiqué dans le tableau 2, cette dépendance en température impacte le comportement dynamique du système. Pour une température supérieure à 50°C, la pression de remplissage devient quasi indépendante de la durée de remplissage sur la gamme de temps sondée.

Un fonctionnement à 70°C conduit à une augmentation de la pression de vidange qui passe de 180 à 220 bar en eau pure tandis que la pression de remplissage passe de de 250 bar à 260 bar.

A 70°C, l'écart de pression osmotique est de 474 bar. On obtient ainsi une pression de remplissage de 260 bar, une pression de vidange de 694 bar, soit une perte d'énergie réduite à 8 %.

### Liste de références

**(1).** Logan, Bruce E, and Menachem Elimelech. "Membrane-Based Processes for Sustainable Power Generation Using Water." Nature 488, no. 7411 (August 16, 2012): 313-19. doi:10.1038/nature11477.
**(2).** Achilli, Andrea, and Amy E. Childress. "Pressure Retarded Osmosis: From the Vision of Sidney Loeb to the First Prototype Installation - Review." Desalination 261, no. 3 (October 2010): 205-11. doi:10.1016/j.desal.2010.06.017.
**(3).** Han, Gang, Sui Zhang, Xue Li, and Tai-shung Chung. "Progress in Polymer Science Progress in Pressure Retarded Osmosis ( PRO ) Membranes for Osmotic Power Generation." Progress in Polymer Science 51 (2015): 1-27. doi:10.1016/j.progpolymsci.2015.04.005.
**(4).** Siria, Alessandro, Marie-Laure Bocquet, and Lydéric Bocquet. "New Avenues for the Large-Scale Harvesting of Blue Energy." Nature Reviews Chemistry 1 (2017): 91. doi:10.1038/s41570-017-0091.
**(5).** Picard, Cyril. "Accumulateurs à Nanoporeux Lyophobes." Techniques de l'Ingénieur, no.RE 266 (2017).
**(6).** Michelin-Jamois, Millan, Cyril Picard, Gerard Vigier, and Elisabeth Charlaix. "Giant Osmotic Pressure in the Forced Wetting of Hydrophobic Nanopores." Physical Review Letters 115 (2015): 036101. doi:10.1103/PhysRevLett.115.036101.
(7). Brogioli, Doriano. "Extracting Renewable Energy from a Salinity Difference Using a Capacitor." Physical Review Letters 103, no. 058501 (2009): 1-4. doi:10.1103/PhysRevLett.103.058501.
**(8).** Park, Kyo Sung, Zheng Ni, Adrien P Côté, Jae Yong Choi, Rudan Huang, Fernando J Uribe-Romo, Hee K Chae, Michael O'Keeffe, and Omar M Yaghi. "Exceptional Chemical and Thermal Stability of Zeolitic Imidazolate Frameworks." Proceedings of the National Academy of Sciences 103, no. 27 (2006): 8-13.
**(9).** M. Michelin-Jamois, et al. Giant Osmotic Pressure in the Forced Wetting of Hydrophobic Nanopores. Physical Review Letters 115 (2015).
**(10).** V. Gérard. Technique d'intrusiométrie rapide pour l'étude expérimentale du mouillage dynamique et du transport de solutés dans des pores hydrophobes nanométriques, thèse Université Grenoble Alpes, (2020).

## Revendications

1. Procédé P1 de conversion d'énergie osmotique en énergie hydraulique, **caractérisé en ce qu'**il comprend les étapes :
1a) mise en contact d'une solution aqueuse A comprenant un sel de préférence choisi parmi les sel de métal alcalin et/ou alcalino-terreux, et d'un matériau nanoporeux hydrophobe sélectif dont le volume nanoporeux au sein du matériau n'est accessible qu'à l'eau douce et présentant une fraction volumique en nanoporosité allant de 0,2 à 1, de préférence de 0,3 à 0,6, 1b) pressurisation du mélange obtenu à l'étape 1a) à une pression allant de 10 à 1000 bar, de préférence de 10 à 500 bar, et intrusion de l'eau dans le matériau nanoporeux,
1c) lavage isochore du mélange pressurisé obtenu à l'étape 1b), le lavage étant réalisé au moyen d'une solution aqueuse B comprenant un sel de préférence choisi parmi les sel de métal alcalin et/ou alcalino-terreux,,
1d) dépressurisation du mélange lavé à l'étape 1c) et expulsion de l'eau hors du matériau nanoporeux et dilution de la solution B et collecte d'énergie hydraulique,
dont la concentration en sel de la solution B est supérieure à celle de la solution A, l'écart de concentration en sel entre la solution A et la solution B étant compris dans un intervalle allant de 0,5 à 25 mol/L.

2. Procédé selon la revendication précédente, dans lequel la solution B a une concentration en sel inférieure ou égale à 25 mol/L.

3. Procédé selon la revendication 1 ou 2, dans lequel la solution A a une concentration en sel allant de 0 à 2 mol/L.

4. Procédé selon l'une quelconque des revendications précédentes, dans lequel le matériau nanoporeux est choisi parmi les MOF, les zéolites, les imogolites, les silices mésoporeuses, les organosiliciques mésoporeux et les aérogels, de préférence le matériau nanoporeux est choisi dans le groupe constitué du ZIF-8, du Cu2(tebpz), de la silicalite, de la chabazite et du SSZ-24.

5. Procédé selon l'une quelconque des revendications précédentes, dans lequel le matériau nanoporeux a des pores de diamètre moyen allant de 0,5 à 5 nm.

6. Procédé selon l'une quelconque des revendications précédentes, dans lequel le matériau nanoporeux a des constrictions de diamètre moyen de 0,2 à 1 nm, de préférence allant de 0,2 nm à 0,5 nm.

7. Procédé selon l'une quelconque des revendications précédentes, dans lequel le volume de matériau nanoporeux sur le volume du milieu réactionnel, représentent un ratio M (v/v) de 0,2 à 1, de préférence 0,7.

8. Procédé selon l'une quelconque des revendications précédentes, comprenant en outre une étape 1e) de lavage isochore du mélange obtenu à l'issue de l'étape 1d), le lavage étant réalisé au moyen d'une solution aqueuse A.

9. Procédé selon l'une quelconque des revendications précédentes, comprenant en outre une étape 1f) de conversion de l'énergie hydraulique collectée à l'étape 1d) en énergie mécanique ou électrique.

10. Procédé selon la revendication 8 ou 9, dans lequel les étapes 1b), 1c), 1d), 1e) et éventuellement 1f) sont répétées un nombre n d'itérations, n étant un nombre entier supérieur ou égal à 2.

11. Procédé selon l'une quelconque des revendications précédentes, ledit procédé étant mis en œuvre à une température allant de 5 à 150 °C, de préférence de 20 à 70 °C.

12. Procédé P2 de dessalement d'une solution comprenant un sel, de préférence de l'eau de mer ou saumurée, **caractérisé en ce qu'**il comprend les étapes :
2a) mise en contact d'une solution aqueuse B comprenant un sel de préférence choisi parmi les sel de métal alcalin et/ou alcalino-terreux, et d'un matériau nanoporeux hydrophobe sélectif dont le volume nanoporeux au sein du matériau n'est accessible qu'à l'eau douce et présentant une fraction volumique en nanoporosité allant de 0,2 à 1, de préférence de 0,3 à 0,6,
2b) pressurisation du mélange obtenu à l'étape 2a) à une pression allant de 10 à 1200 bar, de préférence de 200 à 800 bar et de manière encore préférée 250 bar, et intrusion de l'eau dans le matériau nanoporeux,
2c) lavage isochore du mélange pressurisé obtenu à l'étape 2b), le lavage étant réalisé au moyen d'une solution aqueuse C, la solution aqueuse C étant de l'eau pure ou de l'eau douce,
2d) dépressurisation du mélange lavé obtenu à l'étape 2c), expulsion de l'eau hors du matériau nanoporeux, dilution de la solution C et collecte d'eau appauvrie en sel.

13. Procédé selon la revendication précédente, comprenant en outre une étape 2e) de lavage isochore du mélange obtenu à l'issue de l'étape 2d), le lavage étant réalisé au moyen d'une solution aqueuse B.

14. Procédé selon la revendication précédente, dans lequel les étapes 2b), 2c), 2d) et 2e) sont répétées un nombre m d'itérations, m étant un nombre entier supérieur ou égal à 2.

## Patentansprüche

1. Verfahren P1 zur Umwandlung von osmotischer Energie in hydraulische Energie, **dadurch gekennzeichnet, dass** es die folgenden Schritte umfasst:
1a) das In-Kontakt-Bringen einer wässrigen Lösung A, die ein Salz umfasst, das vorzugsweise aus Alkali- und/oder Erdalkalimetallsalzen ausgewählt ist, mit einem selektiven hydrophoben nanoporösen Material, dessen nanoporöses Volumen im Inneren des Materials nur für Süßwasser zugänglich ist und das einen Volumenanteil der Nanoporosität von 0,2 bis 1, vorzugsweise von 0,3 bis 0,6, aufweist,
1b) das Beaufschlagen der in Schritt 1a) erhaltenen Mischung mit einem Druck von 10 bis 1000 bar, vorzugsweise von 10 bis 500 bar, und die Intrusion von Wasser in das nanoporöse Material,
1c) das isochore Waschen der in Schritt 1b) erhaltenen druckbeaufschlagten Mischung, wobei das Waschen mittels einer wässrigen Lösung B erfolgt, die in Salz umfasst, das vorzugsweise aus Alkali- und/oder Erdalkalimetallsalzen ausgewählt ist,
1d) das Druckentlasten der in Schritt 1c) gewaschenen Mischung und das Austreiben von Wasser aus dem nanoporösen Material und das Verdünnen der Lösung B und das Sammeln von hydraulischer Energie,
wobei die Salzkonzentration von Lösung B höher als diejenige von Lösung A ist, der Unterschied der Salzkonzentration zwischen Lösung A und Lösung B in einem Intervall von 0,5 bis 25 mol/l liegt.

2. Verfahren nach dem vorhergehenden Anspruch, wobei Lösung B eine Salzkonzentration von weniger als oder gleich 25 mol/l aufweist.

3. Verfahren nach Anspruch 1 oder 2, wobei Lösung A eine Salzkonzentration von 0 bis 2 mol/l aufweist.

4. Verfahren nach einem der vorhergehenden Ansprüche, wobei das nanoporöse Material aus MOFs, Zeolithen, Imogolithen, mesoporösen Siliciumdioxiden, mesoporösen siliciumorganischen Verbindungen und Aerogelen ausgewählt ist, wobei das nanoporöse Material vorzugsweise aus der aus ZIF-8, Cu2(tebpz), Silicalit, Chabasit und SSZ-24 bestehenden Gruppe ausgewählt ist.

5. Verfahren nach einem der vorhergehenden Ansprüche, wobei das nanoporöse Material Poren mit einem mittleren Durchmesser von 0,5 bis 5 nm aufweist.

6. Verfahren nach einem der vorhergehenden Ansprüche, wobei das nanoporöse Material Verengungen mit einem mittleren Durchmesser von 0,2 bis 1 nm, vorzugsweise von 0,2 bis 0,5 nm, aufweist.

7. Verfahren nach einem der vorhergehenden Ansprüche, wobei das Volumen des nanoporösen Materials bezogen auf das Volumen des Reaktionsmediums ein Verhältnis M (v/v) von 0,2 bis 1, vorzugsweise 0,7, darstellt.

8. Verfahren nach einem der vorhergehenden Ansprüche, das außerdem einen Schritt 1e) eines isochoren Waschens der nach Schritt 1d) erhaltenen Mischung umfasst, wobei das Waschen mittels einer wässrigen Lösung A erfolgt.

9. Verfahren nach einem der vorhergehenden Ansprüche, das außerdem einen Schritt 1f) des Umwandelns der in Schritt 1d) gesammelten hydraulischen Energie in mechanische oder elektrische Energie umfasst.

10. Verfahren nach Anspruch 8 oder 9, wobei die Schritte 1b), 1c), 1d), 1e) und gegebenenfalls 1f) für eine Zahl n von Wiederholungen wiederholt werden, wobei n eine ganze Zahl größer als oder gleich 2 ist.

11. Verfahren nach einem der vorhergehenden Ansprüche, wobei das Verfahren bei einer Temperatur von 5 bis 150 °C, vorzugsweise von 20 bis 70 °C, durchgeführt wird.

12. Verfahren P2 zum Entsalzen einer ein Salz umfassenden Lösung, vorzugsweise von Meerwasser oder Sole, **dadurch gekennzeichnet, dass** es die folgenden Schritte umfasst:
2a) das In-Kontakt-Bringen einer wässrigen Lösung B, die ein Salz umfasst, das vorzugsweise aus Alkali- und/oder Erdalkalimetallsalzen ausgewählt ist, mit einem selektiven hydrophoben nanoporösen Material, dessen nanoporöses Volumen im Inneren des Materials nur für Süßwasser zugänglich ist und das einen Volumenanteil der Nanoporosität von 0,2 bis 1, vorzugsweise von 0,3 bis 0,6, aufweist,
2b) das Beaufschlagen der in Schritt 2a) erhaltenen Mischung mit einem Druck von 10 bis 1200 bar, vorzugsweise von 200 bis 800 bar und noch mehr bevorzugt von 250 bar, und die Intrusion von Wasser in das nanoporöse Material,
2c) das isochore Waschen der in Schritt 2b) erhaltenen druckbeaufschlagten Mischung, wobei das Waschen mittels einer wässrigen Lösung C erfolgt, wobei es sich bei der wässrigen Lösung C um reines Wasser oder Süßwasser handelt,
2d) das Druckentlasten der in Schritt 2c) erhaltenen gewaschenen Lösung, das Austreiben von Wasser aus dem nanoporösen Material, das Verdünnen der Lösung C und das Sammeln von an Salz verarmtem Wasser.

13. Verfahren nach dem vorhergehenden Anspruch, das außerdem einen Schritt 2e) des isochoren Waschens der nach Schritt 2d) erhaltenen Mischung umfasst, wobei das Waschen mittels einer wässrigen Lösung B erfolgt.

14. Verfahren nach dem vorhergehenden Anspruch, wobei die Schritte 2b), 2c), 2d) und 2e) für eine Zahl m von Wiederholungen wiederholt werden, wobei m eine ganze Zahl größer als oder gleich 2 ist.

## Claims

1. A process P1 for converting osmotic energy into hydraulic energy, **characterized in that** it comprises the steps:
1a) contacting of an aqueous solution A comprising a salt preferably selected from alkali metal and/or alkaline earth metal salts, and a selective hydrophobic nanoporous material whose nanopore volume within the material is accessible only to fresh water and which has a volume fraction of nanoporosity of from 0.2 to 1, preferably from 0.3 to 0.6,
1b) pressurization of the mixture obtained in step 1a) to a pressure of from 10 to 1000 bar, preferably from 10 to 500 bar, and intrusion of water into the nanoporous material,
1c) isochoric washing of the pressurized mixture obtained in step 1b), the washing being carried out by means of an aqueous solution B comprising a salt preferably selected from alkali metal and/or alkaline earth metal salts,
1d) depressurization of the mixture washed in step 1c) and expulsion of water from the nanoporous material and dilution of solution B and collection of hydraulic energy,
wherein the salt concentration of solution B is greater than that of solution A, the difference in salt concentration between solution A and solution B being within a range from 0.5 to 25 mol/L.

2. The process as claimed in the preceding claim, wherein solution B has a salt concentration of less than or equal to 25 mol/L.

3. The process as claimed in claim 1 or 2, wherein solution A has a salt concentration of from 0 to 2 mol/L.

4. The process as claimed in any one of the preceding claims, wherein the nanoporous material is selected from MOFs, zeolites, imogolites, mesoporous silicas, mesoporous organosilicon compounds and aerogels, the nanoporous material preferably being selected from the group consisting of ZIF-8, Cu2(tebpz), silicalite, chabazite and SSZ-24.

5. The process as claimed in any one of the preceding claims, wherein the nanoporous material has pores whose mean diameter is from 0.5 to 5 nm.

6. The process as claimed in any one of the preceding claims, wherein the nanoporous material has constrictions whose mean diameter is from 0.2 to 1 nm, preferably from 0.2 nm to 0.5 nm.

7. The process as claimed in any one of the preceding claims, wherein the volume of nanoporous material relative to the volume of the reaction medium represents a ratio M (v/v) of 0.2 to 1, preferably 0.7.

8. The process as claimed in any one of the preceding claims, further comprising a step 1e) of isochoric washing of the mixture obtained at the end of step 1d), the washing being carried out by means of an aqueous solution A.

9. The process as claimed in any one of the preceding claims, further comprising a step 1f) of conversion of the hydraulic energy collected in step 1d) into mechanical or electrical energy.

10. The process as claimed in claim 8 or 9, wherein steps 1b), 1c), 1d), 1e) and optionally 1f) are repeated a number n of iterations, n being an integer greater than or equal to 2.

11. The process as claimed in any one of the preceding claims, said process being performed at a temperature of from 5 to 150°C, preferably from 20 to 70°C.

12. A process P2 for desalinating a solution comprising a salt, preferably briny or sea water, **characterized in that** it comprises the steps:
2a) contacting of an aqueous solution B comprising a salt preferably selected from alkali metal and/or alkaline earth metal salts, and a selective hydrophobic nanoporous material whose nanopore volume within the material is accessible only to fresh water and which has a volume fraction of nanoporosity of from 0.2 to 1, preferably from 0.3 to 0.6,
2b) pressurization of the mixture obtained in step 2a) to a pressure of from 10 to 1200 bar, preferably from 200 to 800 bar and more preferably 250 bar, and intrusion of water into the nanoporous material,
2c) isochoric washing of the pressurized mixture obtained in step 2b), the washing being carried out by means of an aqueous solution C, the aqueous solution C being pure water or fresh water,
2d) depressurization of the washed mixture obtained in step 2c), expulsion of water from the nanoporous material, dilution of solution C and collection of salt-depleted water.

13. The process as claimed in the preceding claim, further comprising a step 2e) of isochoric washing of the mixture obtained at the end of step 2d), the washing being carried out by means of an aqueous solution B.

14. The process as claimed in the preceding claim, wherein steps 2b), 2c), 2d) and 2e) are repeated a number m of iterations, m being an integer greater than or equal to 2.
